# EUROPÄISCHE PATENTANMELDUNG

(11) **EP 1 146 759 A2**
(43) Veröffentlichungstag der Anmeldung: **17.10.2001**
(21) Anmeldenummer: 01250005.4
(22) Anmeldetag: 05.01.2001
(51) Int. Cl.: H04Q 7/32

(54) **SIM-Lock auf bestimmte IMSI-Bereiche einer SIM-Karte für Prepaid-und Postpaid- Karten**

(30) Priorität: 12.04.2000 DE 10019164
(71) Anmelder: MANNESMANN Aktiengesellschaft, 40213 Düsseldorf (DE)
(72) Erfinder: Hedermann, Ralf, Dipl.-Ing, 40670 Meerbusch (DE); Lubjahn, Ralf, Dipl.-Oec., 40670 Meerbusch (DE)
(74) Vertreter: Meissner, Peter E., Dipl.-Ing.

(57) **Zusammenfassung**

Das voneinander unabhängige Benutzen von als Paket verkauften Mobilfunkteilnehmer-ldentifikationskarten und Mobilfunkendgeräten wird ermöglicht durch ein Verfahren und ein Mobilfunkendgerät, welche das Telefonieren des Mobilfunkendgerätes mit einer darin eingelegten Mobilfunkteilnehmer-Identifikationskarte nur dann erlauben, wenn bestimmte vom Mobilfunkendgerät ausgelesene Digits der IMSI der Mobilfunkteilnehmer-Identifikationskarte innerhalb bestimmter im Endgerät gespeicherter Wertebereiche liegen.

## Beschreibung

Die Erfindung betrifft ein Verfahren und ein Mobilfunkendgerät zur Mobilfunkteilnehmeridentifikationskarten-Prüfung in einem Endgerät.

Mobilfunkteilnehmer-Identifikationskarten (SIM-Karten) werden entweder als Credit-Karten oder als Debit-Karten verkauft. Debit (= Prepaid)-Karten werden zusammen mit Mobilfunkendgeräten (Handys) häufig im Paket verkauft. Jedoch ist das Paket dabei in der Regel kostengünstiger als das Mobilfunkendgerät und die Prepaidkarte einzeln kosten würden.

Aufgabe der Erfindung ist es deshalb zu vermeiden, dass eine Mobilfunkteilnehmer-Identifikationskarte und ein Mobilfunkendgerät, welche als Paket gekauft und getrennt weiterverkauft werden, unabhängig voneinander benutzt werden. Die Aufgabe wird durch die Gegenstände der unabhängigen Ansprüche gelöst.

Durch die erfindungsgemäße Prüfung bestimmter IMSI-Bereiche (Digit 1 bis 8 der IMSI) auf einer Mobilfunkteilnehmer-Identifikationskarte (insbesondere beim Einschalten des Endgerätes,) kann ein Mobilfunkendgerät zuverlässig entscheiden, ob es mit dieser Karte betrieben (= Telefonieren oder SMS) werden darf oder nicht. Insbesondere wenn bestimmte Digits der Mobilfunkteilnehmer-Identifikationskarte (insbesondere Betreiberkennung und/oder die HLR-Kennung und/oder die Vorwahl-Kennung) geprüft werden, ist eine zuverlässige Entscheidung des Mobilfunkendgerätes darüber, ob es sich bei der Mobilfunkteilnehmer-Identifikationskarte um eine zugelassene (=mit dem Mobilfunkgerät verkaufte oder hierfür zulässig nachgekaufte) Prepaid-Karte handelt, möglich. Dies wird dadurch ermöglicht, dass im Mobilfunkendgerät bestimmte Wertebereiche von IMSI-Digits gespeichert sind, welche zu überprüfen sind und das Mobilfunkendgerät für bestimmte Wertebereiche den Betrieb (=insbesondere Telefonieren und / oder SMS) mit einer SIM-Karte in diesem Mobilfunkendgerät, zulässt. SIM- Karten mit einem nicht zum Mobilfunkendgerät passenden Wertebereich werden vom Mobilfunkendgerät abgewiesen. Die Größe des Wertbereichs kann z. B. bis zu 100 Kombinationsmöglichkeiten aus MCC, MNC, HLR und NDC umfassen.

Besonders vorteilhafte Ausgestaltungen ergeben sich aus den Unteransprüchen.

Weitere Merkmale und Vorteile der Erfindung ergeben sich aus der nachfolgenden Beschreibung eines Ausführungsbeispiels anhand der Zeichnung. Dabei zeigt:

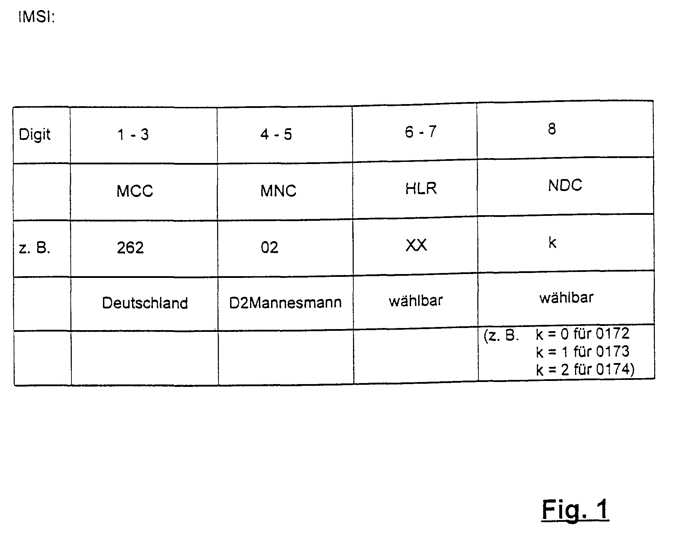

- Fig. 1: ein Beispiel für eine auf einer SIM-Karte gespeicherte IMSI, welche in einem Endgerät mit dort gespeicherten Wertebereichen zulässiger IMSI-Digits verglichen wird.

Ein Mobilfunkendgerät, in welches eine SIM-Karte eingeschoben ist, soll überprüfen, ob es mit dieser SIM-Karte betrieben werden darf. Diese Überprüfung erfolgt zweckmäßig insbesondere beim Einschalten des Mobilfunkendgerätes bei der Überprüfung der eingelegten SIM-Karte (SIM= Subscriber Identity-Module). Hierzu liest das Mobilfunkendgerät mit einer herkömmlichen Leseeinrichtung die IMSI (26202XXK in Fig. 1) einer SIM, welche sich in einer herkömmlichen Aufnahmeeinrichtung im Mobilfunkendgerät befindet, aus. Bestimmte Digits (Stellen) in der IMSI werden vom Endgerät mit im Endgerät gespeicherten vorgegebenen Wertebereichen durch eine Vergleichseinrichtung (z.B. einen herkömmlichen Prozessor im Mobilfunkendgerät oder alternativ der SIM-Karte, der gemäß einem herkömmlich dort gespeicherten Programm arbeitet) verglichen. Nur wenn die Mobilfunkteilnehmer-Identifikationskarten-IMSI-Digits, welche überprüft werden, mit vorgegebenen Wertebereichen übereinstimmen, erlaubt das Mobilfunkendgerät einen Betrieb mit dieser SIM-Karte. Digits der IMSI, welche dabei (in beliebiger Kombination) insbesondere überprüft werden können, sind die Länderkennung MCC = Mobile Country Code (z. B. 262 = Deutschland), die Netzbetreiberkennung MNC = Mobile Network Code (z. B. 02 = D2 Mannesmann), die HLR (home location register)-Kennung, die Vorwahlkennung NDC = Network Destination Code (beispielsweise repräsentiert 0, 1, 2 : 0172, 0173, 0174) und gegebenenfalls das Vorliegen einer GSM-Karte (oder UMTS-Karte etc.). Es können einzelne, mehrere oder alle dieser Digits überprüft werden. Zweckmäßig ist es insbesondere, zumindest die Länderkennung, die Netzbetreiberkennung (MNC), die HLR-Kennung und die NDC-Kennung zu überprüfen. Wenn vom Mobilfunknetzbetreiber (mit der MNC gemäß der SIM-IMSI) für Prepaid-Karten nur bestimmte Wertebereiche von HLR und/oder NDC verwendet werden, kann ein Mobilfunkendgerät so hergestellt werden, dass es aufgrund dieser Wertebereiche feststellt, ob eine SIM im Mobilfunkendgerät eine Prepaid-Karte ist oder nicht. Hierfür werden den Herstellern der Mobiltelefone vom Mobilfunknetzbetreiber die im Mobilfunkendgerät (z.B. bei der Herstellung) abzuspeichernden Wertebereiche von MNC, MCC, HLR, NDC mitgeteilt. Wichtig ist, daß der Netzbetreiber Debit- und Credit-Karten, bezüglich der HLRs durch unterschiedliche Bereiche voneinander getrennt hat. D. h. SIM-Karten aus einem speziellen HLR-Bereich sind nur Debit- oder nur Credit-Karten.

Es kann eine Entsperrung mittels Entsperr-Unlock-Codes vorgesehen sein (Master Code in Verbindung mit SIM-Karte). Dabei kann eine Komplett-Entsperrung für beliebige IMS oder eine Teil- Entsperrung (auf verschiedene Levels) für z. B. nur eine bestimmte MCC und MNC vorgesehen sein.

Bei einer Falscheingabe eines Entsperr-Unlock-Codes können unterschiedliche Folgen vorgesehen sein, nämlich z. B. daß nach mehreren Versuchen das Gerät "geblockt" wird wobei eine Aufhebung des Blocks nur im Service-Kreislauf des Herstellers vorgesehen ist. Alternativ kann sich z. B. bei jeder Falscheingabe die Zeitspanne erhöhen, nach welcher das Endgerät wieder eine Codeeingabe annimmt.

## Patentansprüche

1. Verfahren zur Mobilfunkteilnehmer-Identifikationskarten-Prüfung (SIM) in einem Mobilfunkendgerät,
- wobei das Mobilfunkendgerät eine Telefonnummer der Mobilfunkteilnehmeridentifikationskarte repräsentierende Daten (IMSI) aus der Mobilfunkteilnehmeridentifikationskarte ausliest und mit vorgegebenen, im Mobilfunkendgerät gespeicherten Wertebereichen vergleicht und
- wobei der Betrieb dieses Mobilfunkendgerätes mit dieser Mobilfunkteilnehmer-Identifikationskarte (SIM) nur dann durch das Mobilfunkendgerät ermöglicht wird, wenn bestimmte Stellen (Digits) obiger Daten der Mobilfunkteilnehmer-Identifikationskarte innerhalb vorgegebener, im Endgerät gespeicherter Wertebereiche liegen.

2. Verfahren nach Anspruch 1,
**dadurch gekennzeichnet,**
**dass** das Endgerät prüft, ob es sich um eine GSM-Karte handelt und nur in diesem Fall den Betrieb mit dieser Mobilfunkteilnehmer-ldentifikationskarte zulässt.

3. Verfahren nach einem der vorhergehenden Ansprüche,
**dadurch gekennzeichnet,**
**dass** das Mobilfunkendgerät die Länderkennung (MCC) und Netzkennung (MNC) der IMSI überprüft und einen Betrieb mit der Mobilfunkteilnehmer-Identifikationskarte in Abhängigkeit von der Länderkennung und Netzkennung zulässt.

4. Verfahren nach einem der vorhergehenden Ansprüche,
**dadurch gekennzeichnet,**
**dass** das Endgerät die home location register (HLR)-Kennung der IMSI der Mobilfunkteilnehmer-Identifikationskarte überprüft und einen Betrieb des Mobilfunkendgerätes mit der Mobilfunkteilnehmer-Identifikationskarte in Abhängigkeit von der HLR-Kennung zulässt.

5. Verfahren nach einem der vorhergehenden Ansprüche,
**dadurch gekennzeichnet,**
**dass** das Mobilfunkendgerät die Vorwahlkennung NDC (Digit 8) der IMSI der Mobilfunkteilnehmer-ldentifikationskarte überprüft und nur mit bestimmten Vorwahlkennungen einen Betrieb des Mobilfunkendgerätes mit der Mobilfunkteilnehmer-ldentifikationskarte zulässt.

6. Verfahren nach einem der vorhergehenden Ansprüche,
**dadurch gekennzeichnet,**
**dass** zur Erhöhung der Sicherheit das Programm zur Überprüfung der Digits der IMSI in einem anderen Baustein des Mobilfunkendgerätes gespeichert ist, als in dem Baustein des Mobilfunkendgerätes, in welchem der Wertebereich zulässiger IMSI-Digits in Form von Zahlenbereichen und/oder Zahlen abgespeichert ist.

7. Mobilfunkendgerät
mit einer Aufnahmeeinrichtung für eine Mobilfunkteilnehmer-ldentifikationskarte (SIM)
- mit einer Leseeinrichtung zum Auslesen von eine Telefonnummer der Mobilfunkteilnehmeridentifikationskarte repräsentierenden Daten aus der Mobilfunkteilnehmer-ldentifikationskarte,
- mit einer Vergleichseinrichtung zum Vergleichen bestimmter ausgelesener Digits dieser Daten (IMSI) im Mobilfunkendgerät mit im Mobilfunkendgerät gespeicherten Wertebereichen von zulässigen Digits
- wobei das Mobilfunkendgerät so ausgebildet ist, dass es den Betrieb mit einer darin eingelegten Mobilfunkteilnehmer-Identifikationskarte nur dann ermöglicht, wenn bestimmte oder alle die Telefonnummer repräsentierenden Digits in vorgegebenen, im Mobilfunkendgerät gespeicherten Wertebereichen liegen.

8. Mobilfunkendgerät nach Anspruch 7,
**dadurch gekennzeichnet,**
**dass** das Endgerät prüft, ob es sich um eine GSM-Karte handelt und nur in diesem Fall einen Betrieb mit dieser Mobilfunkteilnehmer-ldentifikationskarte zulässt.

9. Mobilfunkendgerät nach einem der Ansprüche 7 oder 8,
**dadurch gekennzeichnet,**
**dass** das Mobilfunkendgerät die Länderkennung (MCC) der IMSI überprüft und einen Betrieb mit der Mobilfunkteilnehmer-Identifikationskarte in Abhängigkeit von der Länderkennung zulässt.

10. Mobilfunkendgerät nach einem der Ansprüche 7 bis 9,
**dadurch gekennzeichnet,**
**dass** das Mobilfunkendgerät die Netzbetreiberkennung der IMSI der Mobilfunkteilnehmer-ldentifikationskarte überprüft und in Abhängigkeit von der Netzbetreiberkennung einen Betrieb des Mobilfunkendgerätes mit der Mobilfunkteilnehmer-ldentifikationskarte zulässt.

11. Mobilfunkendgerät nach einem der Ansprüche 7 bis 10,
**dadurch gekennzeichnet,**
**dass** das Endgerät die home location register (HLR)-Kennung der IMSI der Mobilfunkteilnehmer-Identifikationskarte überprüft und einen Betrieb des Mobilfunkendgerätes mit der Mobilfunkteilnehmer-ldentifikationskarte in Abhängigkeit von der HLR-Kennung zulässt.

12. Mobilfunkendgerät nach einem der Ansprüche 7 bis 11,
**dadurch gekennzeichnet,**
**dass** das Mobilfunkendgerät die Vorwahlkennung der IMSI der Mobilfunkteilnehmer-Identifikationskarte überprüft und nur mit bestimmten Vorwahlkennungen einen Betrieb des Mobilfunkendgerätes mit der Mobilfunkteilnehmer-Identifikationskarte zulässt.

13. Mobilfunkendgerät nach einem der Ansprüche 7 bis 12,
**dadurch gekennzeichnet,**
**dass** nach einer vorgegebenen Zeitspanne oder zu einem vorgegebenen Zeitpunkt das Endgerät sich für den Betrieb mit beliebigen Karten entsperrt.

14. Mobilfunkendgerät nach einem der Ansprüche 7 bis 13,
**dadurch gekennzeichnet,**
**dass** das Programm zur Überprüfung der Digits der IMSI in einem anderen Baustein des Mobilfunkendgerätes gespeichert ist, als in dem Baustein des Mobilfunkendgerätes, in welchem der Wertebereich zulässiger IMSI-Digits in Form von Zahlenbereichen und/oder Zahlen abgespeichert ist.

15. Mobilfunkendgerät nach einem der Ansprüche 7 bis 14,
**dadurch gekennzeichnet,**
**dass** der ermöglichte Betrieb Sprachtelefonie umfaßt.

16. Mobilfunkendgerät nach einem der Ansprüche 7 bis 15,
**dadurch gekennzeichnet,**
**dass** der ermöglichte Betrieb Kurznachrichtenempfang und/ oder -sendung umfaßt.
